# EUROPEAN PATENT APPLICATION

(11) **EP 0 779 353 A2**
(43) Date of publication of application: **18.06.1997**
(21) Application number: 96119884.3
(22) Date of filing: 11.12.1996
(51) Int. Cl.: C09K 9/02

(54) **Novel thermochromic compound and uses thereof**

(30) Priority: 15.12.1995 JP 327409/95; 06.09.1996 JP 236495/96
(71) Applicant: LINTEC Corporation, Tokyo (JP)
(72) Inventor: Watanabe, Junji, Chigasaki-shi, Kanagawa (JP); Nakata, Yasukazu, Matsudo-shi, Chiba (JP); Kogure, Masao, Kitaadachi-gun, Saitama (JP); Saito, Takanori, Misato-shi, Saitama (JP)
(74) Representative: KUHNEN, WACKER & PARTNER

(57) **Abstract**

A compound having a repeating unit represented by general formula (I)

A₁-M₁-X-B-Y-M₂-A₂ (I)

wherein A₁ and A₂ are terminal chain groups, respectively; M₁ and M₂ are mesogen groups, respectively; X and Y are independently a bonding group selected from -COO- and -OCO-; and B is an aromatic group. The compound exhibits ferroelectric twisted grain boundary liquid crystalline properties over a wide range of temperature, and the crystal phases originating from such structure absorb light over a wide range of spectrum including visible light and, hence, are useful as a material for preparing light controlling devices, optical filters, recording devices, heat-sensitive ink, heat-sensitive pigments, toner pigments and the like, showing high industrial usefulness. Furthermore, the thermolabels, heat-sensitive recording media and the like of the present invention have high coloring and decoloring rates and are less expensive because of having no optically active group.

## Description

The present invention relates to novel compounds which exhibit thermochromism and thermochromic materials containing such compounds. More particularly, the present invention relates to novel thermochromic materials which exhibit thermochromism and are suitable for use in light-controlling devices, optical filters, recording devices, thermolabels, heat-sensitive ink, heat-sensitive pigments, toner pigments and the like.

The present invention also relates to heat-sensitive recording media, thermolabels, heat-sensitive ink, heat-sensitive color developing material such as a pigment or a toner pigment and the like utilizing such thermochromic materials. The present invention is not limited to the above-described uses and is applicable to various applications and uses which utilize thermochromism.

Materials exhibiting thermochromism change in their color tone depending on varying thermal environment. Accordingly, thermo-sensors, recording devices and the like can be fabricated using such characteristics.

Thermosensors, recording devices and the like using conventional thermochromic materials, regardless of whether they are inorganic or organic, are much less practical since they require a long time as long as from several seconds to several hours for coloring and decoloring. Thermochromic materials containing a liquid crystal compound are expected to solve such a problem. Times for coloring and decoloring required by thermochromic materials containing a liquid crystal are short as short as from several micro seconds to several seconds. While such liquid crystal-containing materials are suitable for thermo-sensors, they are unsuitable for applications to recording devices, optical filters and the like which require irreversible thermochromic reaction.

Further, some liquid crystal-containing thermochromic materials have introduced certain optically active groups in the liquid crystal moiety in order to cause the whole system to have a helical structure and induce a selective reflective effect due to the helical structure, so that thermal change in tone of the material can occur. However, the introduction of optically active groups into such a liquid crystal compound makes complicated the process of synthesis of a so-modified liquid crystal compound and causes manufacturing cost therefor to increase to a considerable extent.

An object of the present invention is to obviate the above-described problem involved in the prior art and provide a thermochromic material having a liquid crystal compound which does not have optically active groups but exhibits excellent coloring and decoloring properties due to heat.

According to a first aspect of the present invention, there is provided a compound having a repeating unit represented by general formula (I):

A₁-M₁-X-B-Y-M₂-A₂ (I)

wherein A₁ and A₂ are terminal chain groups, respectively; M₁ and M₂ are mesogen groups, respectively; X and Y are independently a bonding group selected from -COO- and -OCO-; and B is an aromatic group.

Here, the groups A₁ and A₂ may be independently at least one member selected from the group consisting of:
-O(CH₂)ₙ₋₁CH₃ (n=1-30)
-(CH₂)ₙ₋₁CH₃ (n=1-30)
-O(CH₂CH₂O)ₙCH₃ (n=1-10)
-O(CH₂CH₂CH₂O)ₙCH₃ (n=1-10)

The groups M₁ and M₂ may be independently at least one member selected from the group consisting of:

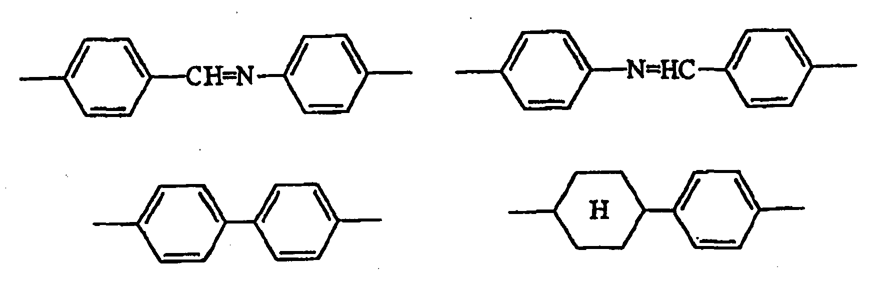

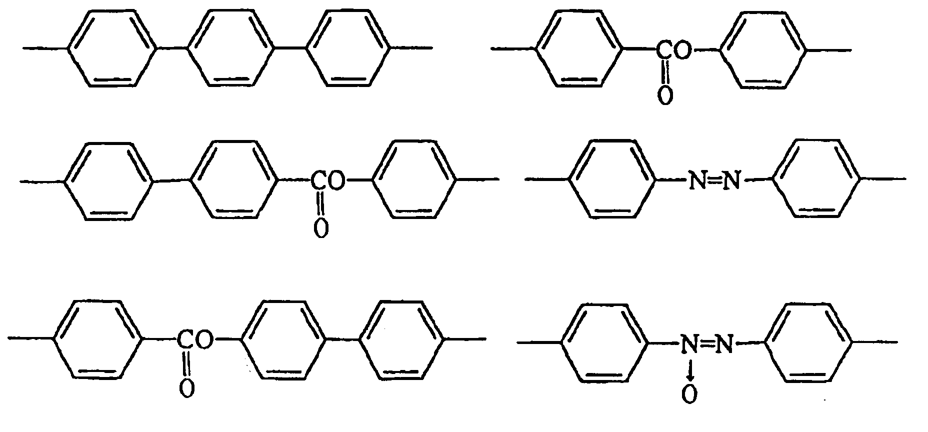

The aromatic group B may be at least one member selected from the group consisting of:

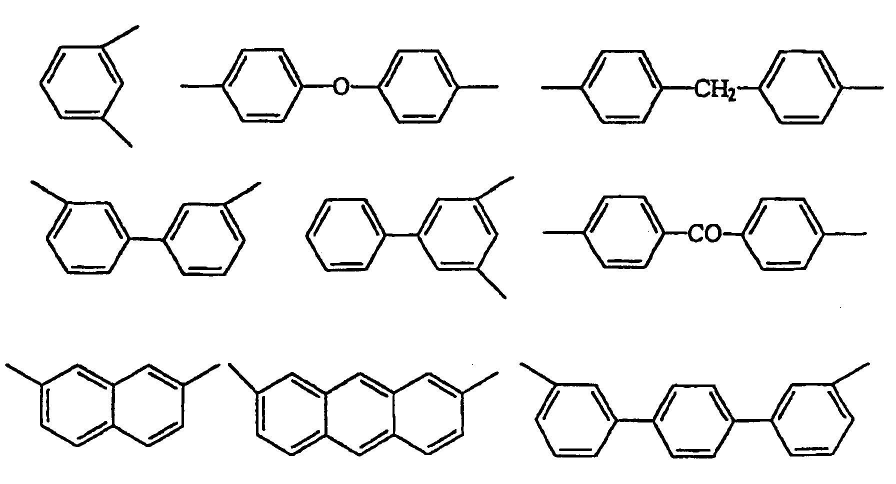

According to a second aspect of the present invention, there is provided a heat-sensitive recording medium comprising the compound according to the first aspect.

According to a third aspect of the present invention, there is provided a heat-sensitive color developing material comprising the compound according to the first aspect.

According to a fourth aspect of the present invention, there is provided a thermolabel comprising a substrate and a layer provided on said substrate comprising the compound according to the first aspect.

According to a fifth aspect of the present invention, there is provided a heat-sensitive ink comprising a vehicle and the compound accroding to the first aspect dispersed therein.

In the present invention, use is made of a compound represented by general formula (I):

A₁-M₁-X-B-Y-M₂-A₂ (I)

wherein A₁ and A₂ are terminal chain groups, respectively; M₁ and M₂ are mesogen groups, respectively; X and Y are independently a bonding group selected from -COO- and -OCO-; and B is an aromatic group.

The thermotropic materials having the novel compound of the present invention exhibit ferroelectric twisted grain boundary liquid crystalline properties over a wide range of temperature, and the crystal phases originating from such structure absorb light over a wide range of spectrum including visible light and, hence, the thermotropic materials of the present invention are useful as a material for preparing light controlling devices, optical filters, recording devices, heat-sensitive ink, heat-sensitive pigments, toner pigments and the like, showing high industrial usefulness.

Furthermore, the thermolabels, heat-sensitive recording media and the like of the present invention have high coloring and decoloring rates and less expensive because of having no optically active group.

The above and other objects, effects, features and advantages of the present invention will become more apparent from the following description of the embodiment thereof taken in conjunction with the accompanying drawings.
Fig. 1 is a diagram illustrating ultraviolet-visible light absorption spectra of a crystalline phase induced from a ferroelectric twisted grain boundary crystalline (TGB) phase according to Example 1 of the present invention;
Fig. 2 is a diagram illustrating ultraviolet-visible light absorption spectra of a crystalline phase induced from a ferroelectric twisted grain boundary crystalline (TGB) phase according to Example 2 of the present invention;
Fig. 3 is a diagram illustrating ultraviolet-visible light absorption spectra of a crystalline phase induced from a ferroelectric twisted grain boundary crystalline (TGB) phase according to Example 3 of the present invention;
Fig. 4 is a diagram illustrating ultraviolet-visible light absorption spectra of a crystalline phase induced from a ferroelectric twisted grain boundary crystalline (TGB) phase according to Example 4 of the present invention;
Fig. 5 is a diagram illustrating ultraviolet-visible light absorption spectra of a crystalline phase induced from a ferroelectric twisted grain boundary crystalline (TGB) phase according to Example 5 of the present invention;
Fig. 6 is a diagram illustrating ultraviolet-visible light absorption spectra of a crystalline phase induced from a ferroelectric twisted grain boundary crystalline (TGB) phase according to Example 6 of the present invention;
Fig. 7 is a diagram illustrating ultraviolet-visible light absorption spectra of a crystalline phase induced from a ferroelectric twisted grain boundary crystalline (TGB) phase according to Example 7 of the present invention;
Fig. 8A is a cross-sectional view showing a heat-sensitive recording device according to an embodiment of the present invention, illustrating the state of thermochromic compound molecules therein before recording for explaining the principle of recording;
Fig. 8B is a cross-sectional view showing a heat-sensitive recording device according to an embodiment of the present invention, illustrating the state where the heated portion changed into a ferroelectric TGB phase;
Fig. 8C is a cross-sectional view showing a heat-sensitive recording device according to an embodiment of the present invention, illustrating the state where the ferroelectric TGB phase changed to a crystalline phase by cooling;
Fig. 8D is a cross-sectional view showing a heat-sensitive recording device according to an embodiment of the present invention, illustrating the state where the crystalline phase changed to an isotropic phase by heating; and
Fig. 8E is a cross-sectional view showing a heat-sensitive recording device according to an embodiment of the present invention, illustrating the state where the isotropic phase changed to an isotropic crystalline phase by cooling.

The novel thermochromic material of the present invention has a structure represented by general formula (I):

A₁-M₁-X-B-Y-M₂-A₂ (I)

wherein A₁ and A₂ are terminal chain groups, respectively; M₁ and M₂ are mesogen groups, respectively; X and Y are independently a bonding group selected from -COO- and -OCO-; and B is an aromatic group.

It is preferred that the thermochromic material of the present invention shows a ferroelectric smectic liquid crystalline phase structure and a ferroelectric twisted grain boundary (TGB) liquid crystalline phase structure.

The thermotropic material of the present invention represented by general formula (I) above can be prepared as follows.

In general formula (I) above, A₁ and A₂ are terminal groups, respectively, selected from alkyl groups having 1 to 30 carbon atoms, alkoxy groups having 1 to 30 carbon atoms, methyl (poly)ethylene oxide groups having 3 to 21 carbon atoms, and methyl (poly)propylene oxide groups having 4 to 31 carbon atoms. A₁ and A₂ may be the same or different.

Specific examples of the terminal chain groups include the following terminal chain groups:
-O(CH₂)ₙ₋₁CH₃ (n=1-30)
-(CH₂)ₙ₋₁CH₃ (n=1-30)
-O(CH₂CH₂O)ₙCH₃ (n=1-10)
-O(CH₂CH₂CH₂O)ₙCH₃ (n=1-10)

In general formula (I), M₁ and M₂ are mesogen groups, respectively, which include mesogen groups having a phenylene chain structure containing two or more phenylene groups bonded to each other at the para-positions thereof, those having such a phenylene chain structure as described above with the phenylene chain being interrupted by an oxycarbonyl group (-(CO)O-), a diazo group (-N=N-) or an azomethine group (-CH=N-), or those containing a cyclohexyl group and a phenylene group directly bonded to each other at the para-positions thereof.

Specific examples of the mesogen groups include the following:

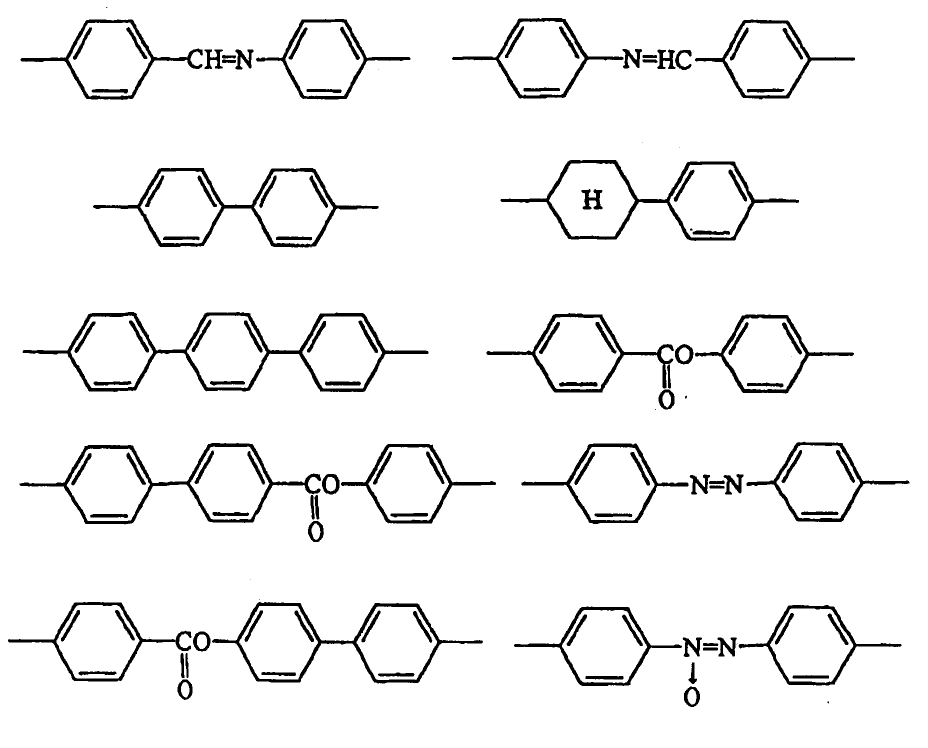

The skeleton of these mesogen groups may be substituted partially or entirely with one or more substituent groups such as a cyano group, a halogen group, a methoxy group, a methyl group and the like.

In general formula (I), B is a divalent group derived from an aromatic compound, for example, and includes the following divalent aromatic groups:

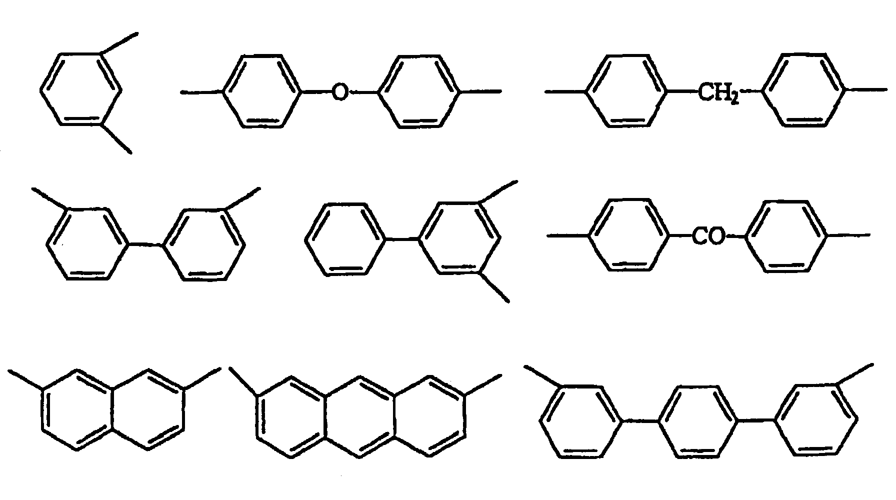

Specific examples of the compounds represented by general formula (I) wherein A₁, A₂, M₁, M₂ and B have the above-described meanings include the following compounds:

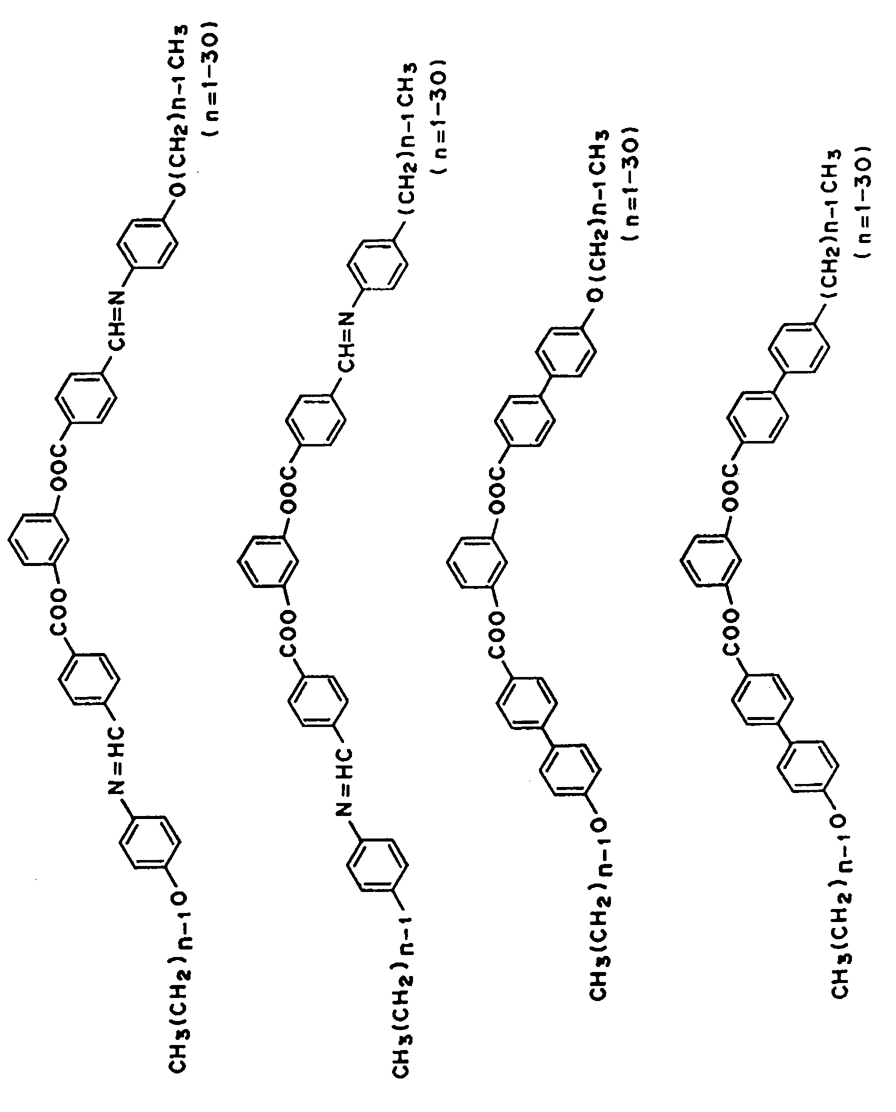

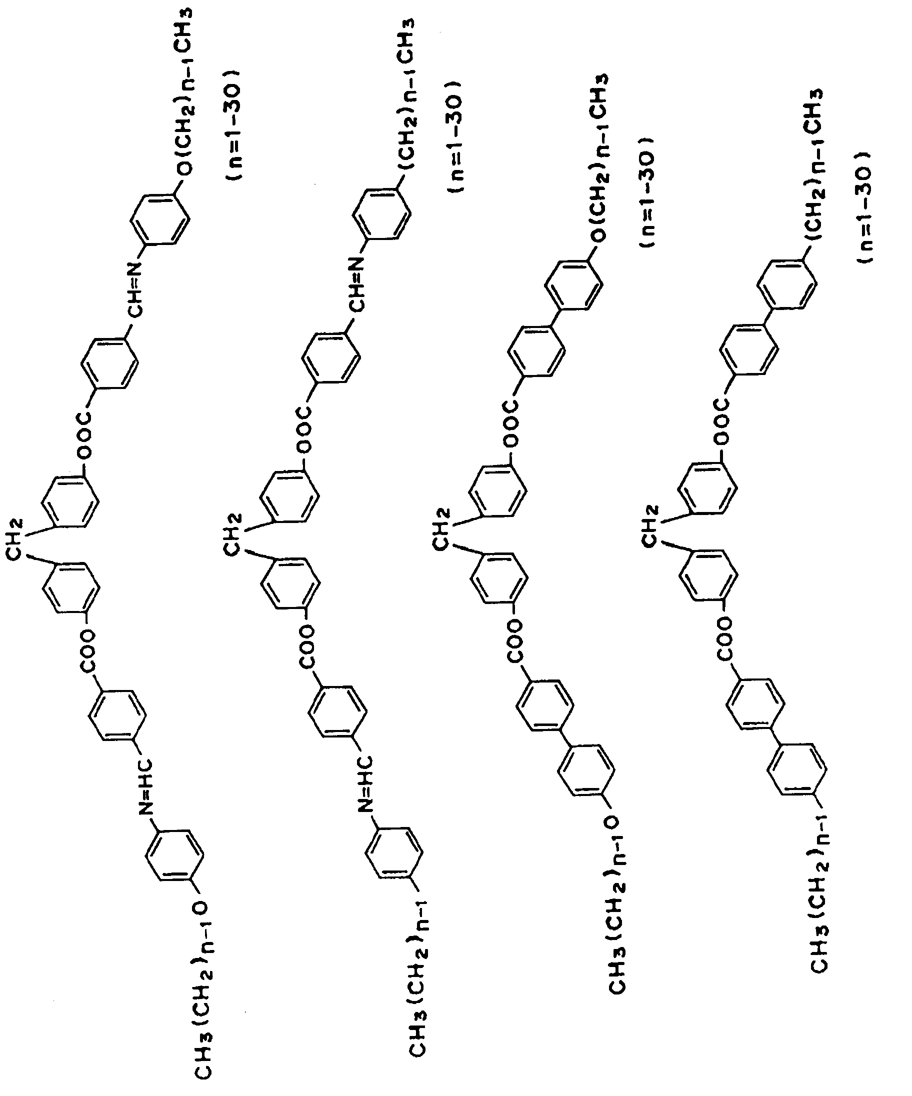

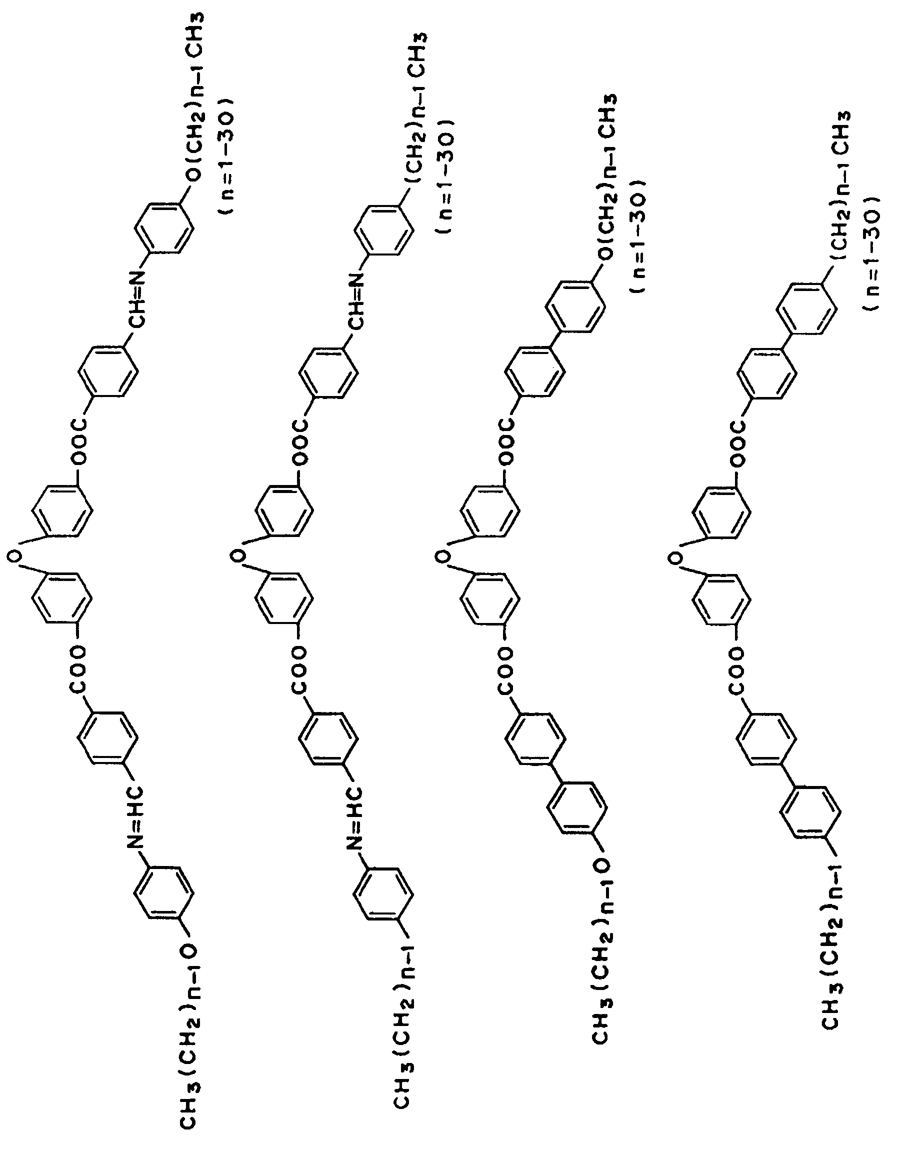

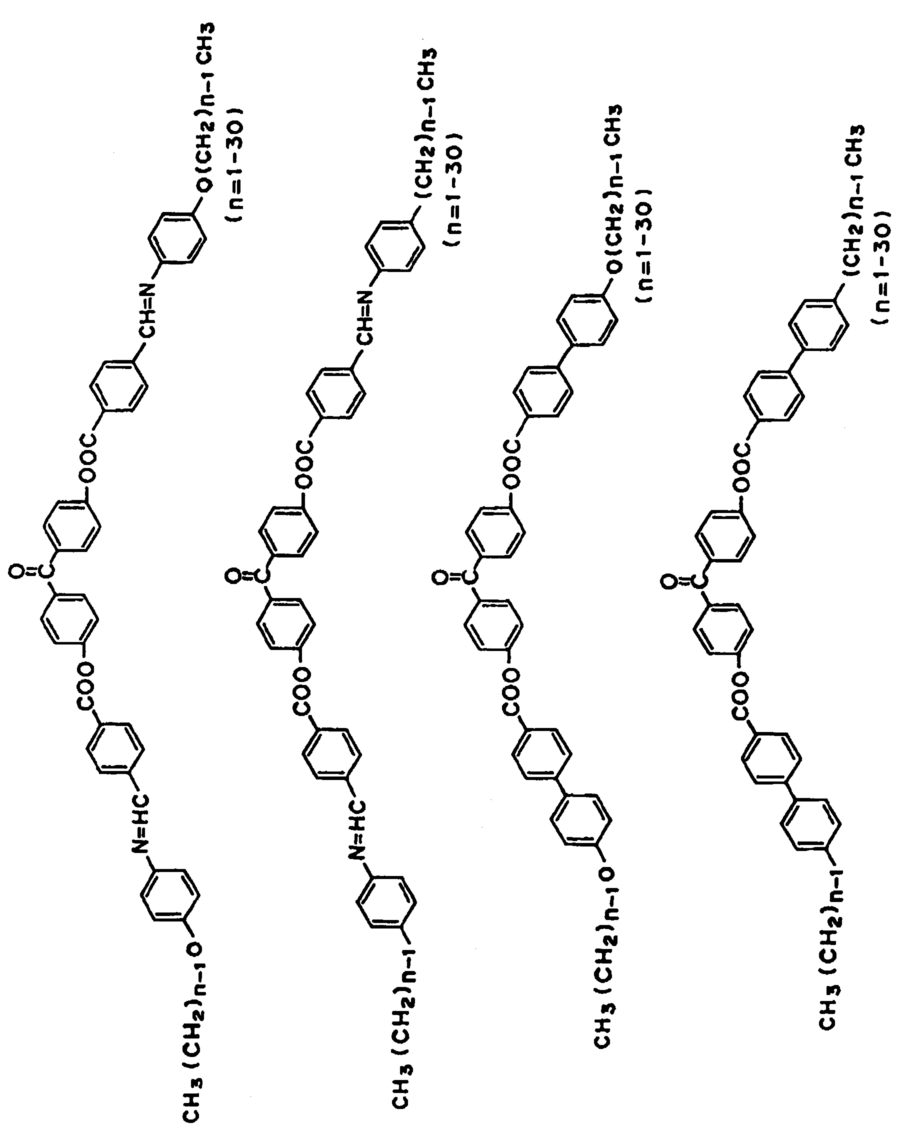

These compounds show a ferroelectric smectic C liquid crystalline phase over a wide range of temperature, for example, from 20°C to 350°C, and a new kind of liquid crystalline phase, i.e., a ferroelectric twisted grain boundary (TGB) liquid crystalline phase induced by the conformation of the molecule derived from the ferroelectric smectic C liquid, over a wide range of temperature, for example, from -10°C to 300°C. A liquid crystalline phase formed from the ferroelectric TGB liquid crystalline phase absorbs light over a wide wavelength range of, for example, 200 to 400 nm depending on the form of the ferroelectric TGB liquid crystalline phase.

The thermochromic compound of the present invention forms a ferroelectric smectic C liquid crystalline phase and a ferroelectric TGB liquid crystalline phase and, hence, is excellent in thermochromism.

In the present invention, two or more, for example, of different compounds from the above-described thermochromic compounds can be blended with one or more other known liquid crystalline compounds, for example, 4-octyl-4'-cyanobiphenyl, cholesteryl benzoate, cholesteryl nonanoate, N-(4-methoxybenzylidene)-4-n-butylaniline, N-p-pentyloxybenzylidene-p'-n-butylaniline, benzenehexa-n-hexanoate and the like, to prepare a thermochromic material.

The thermochromic material of the present invention changes in crystalline form from isotropic crystalline phase to a ferroelectric TGB liquid crystalline phase so that it develops a color, which color is maintained in a subsequently formed crystalline phase as a result of cooling. When the colored crystalline phase is heated at temperatures higher than those at which the isotropic crystalline phase is converted to the ferroelectric TGB crystalline phase, it is converted to an isotropic phase and is decolored. This colorless state is maintained by cooling the thermochromic material to convert into an isotropic crystalline phase. Therefore, repeated heating at appropriate selected temperatures makes it possible to switch the thermochromic state thereof between the colorless state and colored state, thus realizing on/off control. Further, since it maintains colored/colorless states even when it is in a crystalline state, the thermochromic material of the present invention is easy to control its thermochromic state and has high reliability. Accordingly, use of the thermochromic material of the present invention allows to construct a heat-sensitive recording medium and further a heat-sensitive recording device using such a heat-sensitive recording medium.

Furthermore, the thermochromic material of the present invention can be used for preparing thermolabels. Typically, the thermochromic material of the present invention is coated on a substrate made of a synthetic resin, for example, and there is provided on the coated substrate a protective film made of a polymer such as polyethylene, polyethylene terephthalate, polypropylene, polystyrene, polyvinyl chloride, polyvinylidene chloride, polyvinylidene fluoride, polyvinyl alcohol, polyvinyl acetate, polyvinyl butyral, polyimide, cellulose triacetate, methyl cellulose, hydroxymethyl cellulose, hydroxypropyl cellulose or the like, to form a label. Characters, symbols and the like may be printed on the substrate or protective film of the label to display various information. The back surface of the label may be provided with a layer of conventional pressure-sensitive adhesive. Furthermore, a release liner may be provided on the pressure-sensitive adhesive layer in order to protect the adhesive layer until use.

The thermochromic material of the present invention can also be used for preparing heat-sensitive ink. For example, the thermochromic material of the present invention is dispersed in a suitable vehicle such as polystyrene, polyvinyl chloride, polyvinylidene chloride, polyvinylidene fluoride, polyvinyl alcohol, polyvinyl acetate, polyvinyl butyral, cellulose triacetate, methyl cellulose, hydroxymethyl cellulose, hydroxypropyl cellulose, gum Arabic, gelatin, epoxy resin and the like. Various additives for use in ink such as a conventional preservative or antiseptic agent or the like may be added.

The thermochromic material of the present invention can be used as a heat-sensitive color developing material such as a pigment and a toner pigment.

### EXAMPLES

Hereinafter, the present invention will be described in greater detail by examples with reference to the attached drawings. However, the present invention should not be construed as being limited thereto.

The chemical structures of the thermochromic materials obtained in the following examples were confirmed by NMR and IR analyses. Measurement of the phase transition temperatures of the compound and confirmation of the phase structure were made by DSC (differential thermal analysis) and observation on a polarized light microscope with a hot stage, respectively.

Table 1 below shows the structural formulae and phase transition behaviors of the compounds prepared in Examples 1 to 5 below In the following examples. In Table 1, phase conditions were named by the following abbreviations:
K : Crystal
Sc* : Ferroelectric smectic C liquid crystalline phase
TGB*: Ferroelectric twisted grain boundary liquid crystalline phase
I : Isotropic phase

### Example 1

### Preparation of 1,3-oxybis(n-hexyloxybenzylideneaniline-benzoic acid)benzene (PD6OAM)

1.1 g of m-dihydroxybenzene, 6.5 g of n-hexyloxyazomethinecarboxylic acid, and 0.2 g of dimethylaminopyridine were dissolved in 50 ml of tetrahydrofuran. To the resulting solution was added 4.1 g of dicyclohexylcarbodiimide over 15 minutes while stirring on an ice bath kept at 0°C. After the resulting solution was stirred for 48 hours, the precipitates were filtered off. The solvent in the solution thus obtained was distilled off under reduced pressure and the residue was dissolved in chloroform and purified by column chromatography using 200 mesh activated alumina as a filler and chloroform as a developing solvent. Thereafter, recrystallization was conducted with chloroform/ethanol to afford a thermochromic material of the target compound in a yield of 95%.
¹³C-NMR(ppm): 13.9, 23.0, 26.3, 30.5, 32.5, 72.3, 114.3, 115.6, 118.2, 122.6, 129.5, 132.8, 141.6, 144.8, 153.5, 157.3, and 164.0.

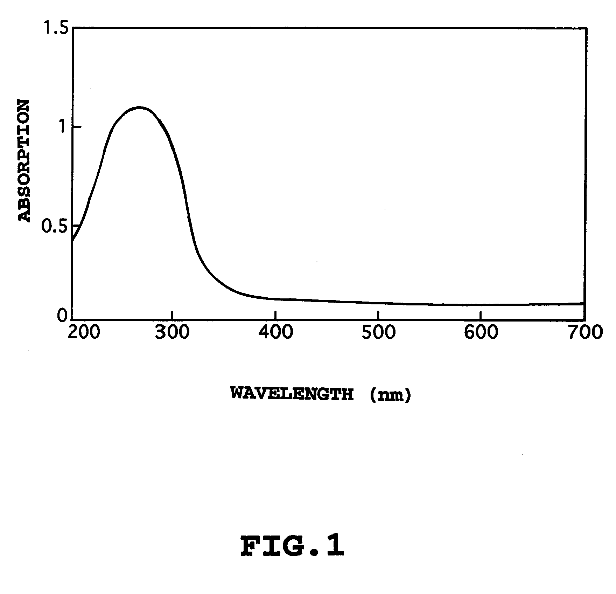

Measurement of the phase transition temperatures of the compound and confirmation of the phase structure of the compound were made by DSC and observation on a polarized light microscope with a hot stage, respectively. Table 1 below shows the results. Fig. 1 illustrates ultraviolet-visible light absorption spectrum of the crystalline phase induced from the ferroelectric TGB liquid crystalline phase.

### Example 2

### Preparation of 1,3-oxybis(4-dodecyloxybenzylideneaniline-benzoic acid)benzene (PD12OAM)

The same procedures as in Example 1 were repeated except for using 8.2 g of n-dodecyloxyazomethinecarboxylic acid instead of n-hexyloxyazomethinecarboxylic acid to obtain a thermochromic material of the target compounds in a yield of 88%.
13C-NMR (ppm): 14.0, 23.1, 26.6, 30.6, 32.5, 72.3, 114.3, 115.5, 118.2, 122.6, 129.5, 132.8, 141.6, 144.8, 153.5, 157.3, and 164.1.

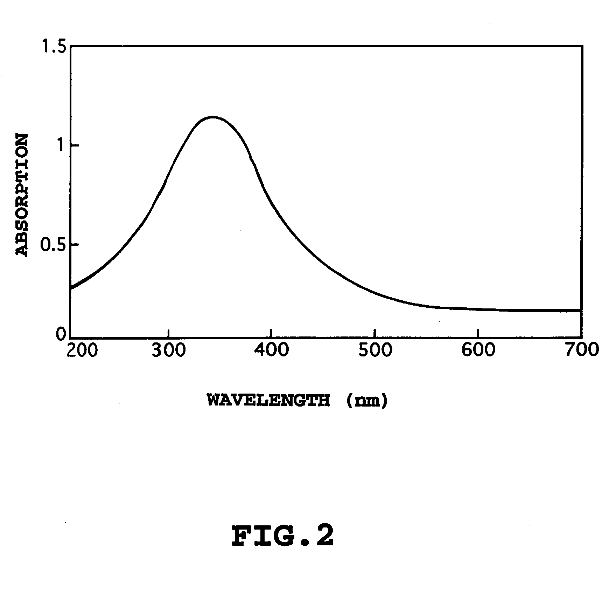

Table 1 below shows the results of phase transition of the compound obtained. Fig. 2 illustrates ultraviolet-visible light absorption spectrum of the crystalline phase induced from the ferroelectric TGB liquid crystalline phase.

### Example 3

### Preparation of 4,4'-oxybis(4-octyloxybenzylideneaniline-benzoic acid)benzophenone (BPhD8OAM)

2.14 g of 4,4'-dihydroxybenzophenone and 7.06 g of n-octyloxyazomethinecarboxylic acid were dissolved in 50 ml of tetrahydrofuran. To the resulting solution was added 4.1 g of dicyclohexylcarbodiimide over 15 minutes while stirring on an ice bath kept at 0°C. After the resulting solution was stirred for 48 hours, the precipitates were filtered off. The solvent in the solution thus obtained was distilled off under reduced pressure and the residue was dissolved in chloroform and purified by column chromatography using 200-mesh activated alumina as a filler and chloroform as a developing solvent. Thereafter, recrystallization was conducted with chloroform/ethanol to afford a thermochromic material of the target compound in a yield of 92%.
¹³C-NMR(ppm): 14.1, 23.1, 26.6, 30.0, 32.5, 72.3, 115.5, 121.5, 122.6, 129.9, 132.8, 141.6, 144.8, 157.3, 163.7, 164.0, and 187.1.

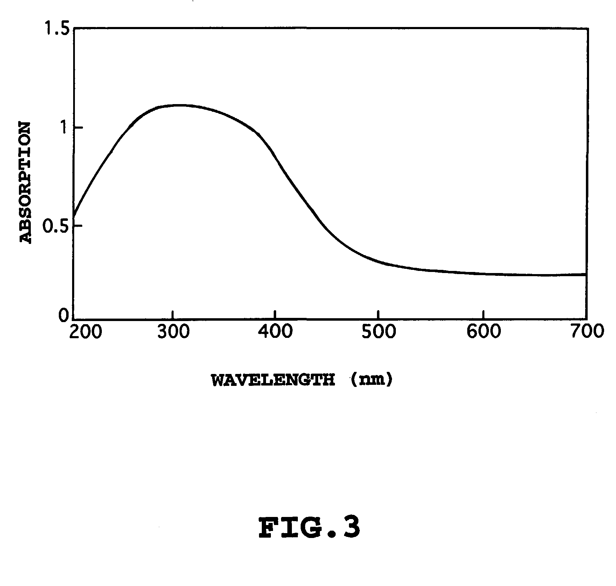

Measurement of the phase transition temperatures of the compound and confirmation of the phase structure of the compound were made by DSC and observation on a polarized light microscope with a hot stage, respectively. Table 1 below shows the results obtained. Fig. 3 illustrates ultraviolet-visible light absorption spectrum of the crystalline phase induced from the ferroelectric TGB liquid crystalline phase.

### Example 4

### Preparation of 2,7-oxybis(4-octyloxybenzylideneaniline-benzoic acid)naphthalene (ND8OAM)

1.67 g of 2,7-dihydroxynaphthalene and 7.06 g of n-octyloxyazomethinecarboxylic acid were dissolved in 50 ml of tetrahydrofuran. To the resulting solution was added 4.1 g of dicyclohexylcarbodiimide over 15 minutes while stirring on an ice bath kept at 0°C. After the resulting solution was stirred for 48 hours, the precipitates were filtered off. The solvent in the solution thus obtained was distilled off under reduced pressure and the residue was dissolved in chloroform and purified by column chromatography using 200-mesh activated alumina as a filler and chloroform as a developing solvent. Thereafter, recrystallization was conducted with chloroform/ethanol to afford a thermochromic material of the target compound in a yield of 85%.
¹³C-NMR(ppm): 13.8, 23.1, 26.6, 30.5, 32.5, 72.3, 115.5, 118.1, 120.8, 122.6, 129.2, 129.8, 132.8, 133.8, 141.6, 144.9, 157.3, and 164.2.

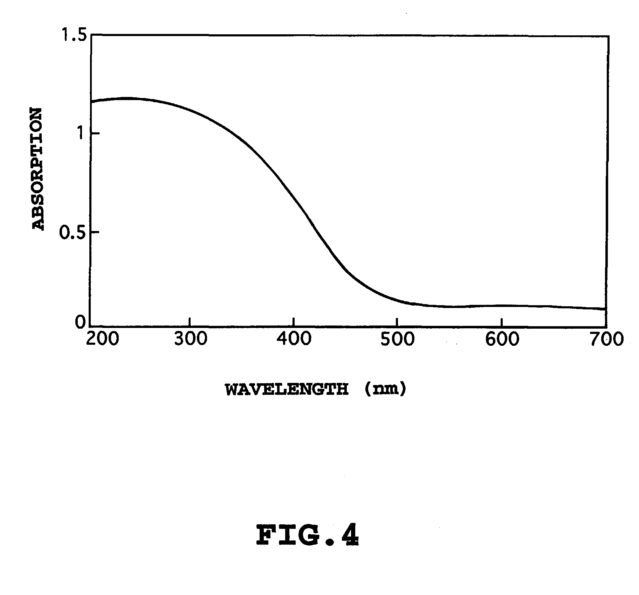

Measurement of the phase transition temperatures of the compound and confirmation of the phase structure of the compound were made by DSC and observation on a polarized light microscope with a hot stage, respectively. Table 1 below shows the results obtained. Fig. 4 illustrates ultraviolet-visible light absorption spectrum of the crystalline phase induced from the ferroelectric TGB liquid crystalline phase.

### Example 5

### Preparation of 1,3-oxybis(4-octyloxybiphenyl-4'-carboxylic acid)benzene (BD8OBP)

1.1 g of m-dihydroxybenzene and 6.6 g of 4-n-octyloxybiphenyl-4'-carboxylic acid were dissolved in 50 ml of tetrahydrofuran. To the resulting solution was added 4.1 g of dicyclohexylcarbodiimide over 15 minutes while stirring on an ice bath kept at 0°C. After the resulting solution was stirred for 48 hours, the precipitates were filtered off. The solvent in the solution thus obtained was distilled off under reduced pressure and the residue was dissolved in chloroform and purified by column chromatography using 200-mesh activated alumina as a filler and chloroform as a developing solvent. Thereafter, recrystallization was conducted with chloroform/ethanol to afford a thermochromic material of the target compound in a yield of 92%.
¹³C-NMR(ppm): 13.8, 23.1, 26.6, 30.3, 30.6, 32.5, 72.3, 114.5, 118.2, 127.3, 128.1, 129.3, 130.2, 140.9, 153.5, 157.7, and 163.9.

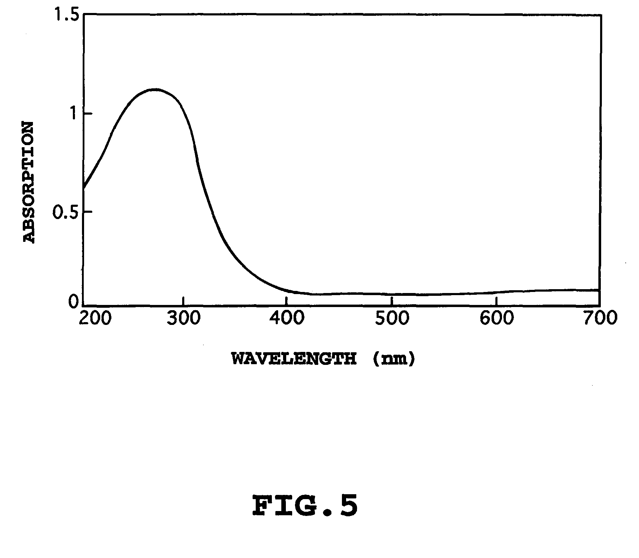

Measurement of the phase transition temperatures of the compound and confirmation of the phase structure of the compound were made by DSC and observation on a polarized light microscope with a hot stage, respectively. Table 1 below shows the results obtained. Fig. 5 illustrates ultraviolet-visible light absorption spectrum of the crystalline phase induced from the ferroelectric TGB liquid crystalline phase.

### Example 6

### Preparation of 1,3-oxybis(octylbenzylideneaniline-benzoic acid)benzene (PD8AM)

The same procedures as in Example 1 were repeated except for using 6.8 g of n-octylazomethinecarboxylic acid instead of n-hexyloxyazomethinecarboxylic acid to obtain a thermochromic material of the target compound in a yield of 82%.
13C-NMR (ppm): 14.0, 23.1, 32.5, 30.0, 32.4, 35.8, 114.3, 118.1, 121.8, 128.0, 129.5, 132.8, 137.9, 150.1, 153.5, and 164.0.

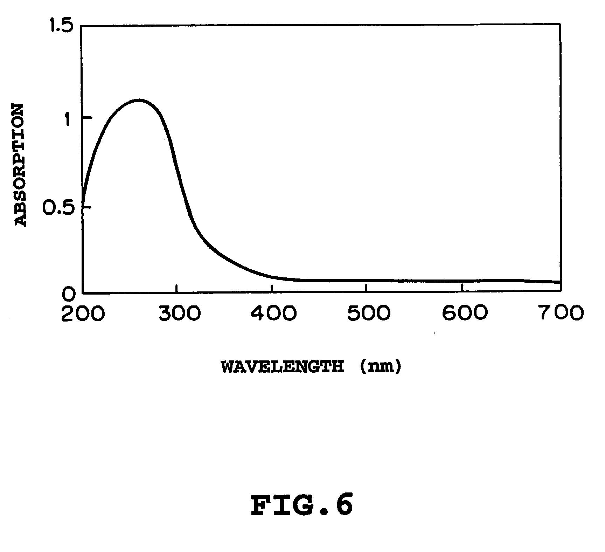

Table 2 below shows the results of phase transition of the compound obtained. The thermochromic material of this example exhibited spontaneous polarization in the ferroelectric Sc phase thereof. The spontaneous polarization measured by a conventional triangle wave method (±8.9 Vµ⁻¹, 1 Hz) was 50 nCcm⁻². Fig. 6 illustrates ultraviolet-visible light absorption spectrum of the crystalline phase induced from the ferroelectric TGB liquid crystalline phase.

### Example 7

### Preparation of 1,3-oxybis(octyloxybenzylideneanilinebenzoic acid)benzene (PD8OAM)

The same procedures as in Example 1 were repeated except for using 7.1 g of n-octyloxyazomethinecarboxylic acid instead of n-hexyloxyazomethinecarboxylic acid to obtain a thermochromic material of the target compound in a yield of 90%.
13C-NMR (ppm): 14.0, 23.1, 26.6, 30.0, 30.6, 32.5, 72.3, 114.3, 115.5, 118.2, 122.6, 129.5, 132.8, 141.6, 144.8, 153.5, 157.3, and 164.1.

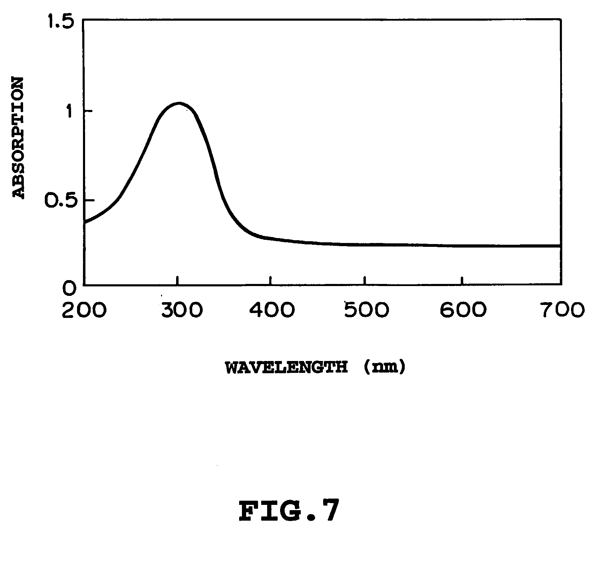

Table 2 below shows the results of phase transition of the compound obtained. The thermochromic material of this example exhibited spontaneous polarization in the ferroelectric Sc phase thereof. The spontaneous polarization measured by triangle wave method (±10.0 Vµ⁻¹, 1 Hz) was 38 nCcm⁻². Fig. 7 illustrates ultraviolet-visible light absorption spectrum of the crystalline phase induced from the ferroelectric TGB liquid crystalline phase.

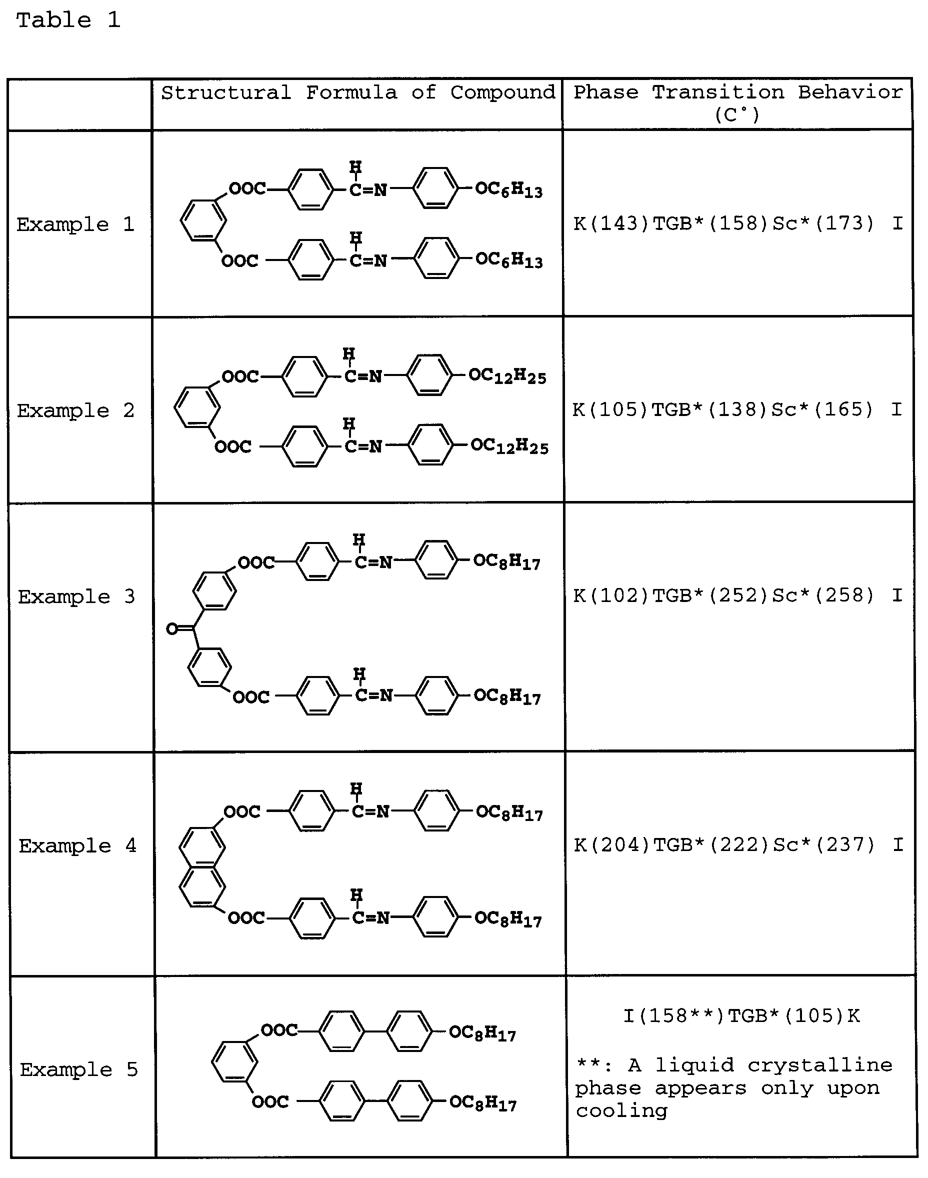

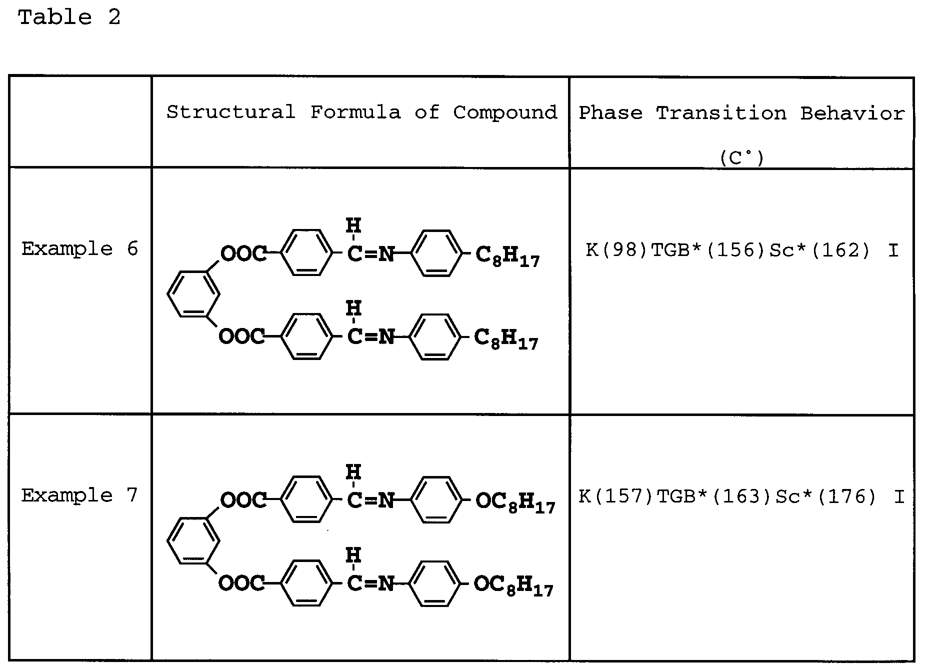

### Example 8

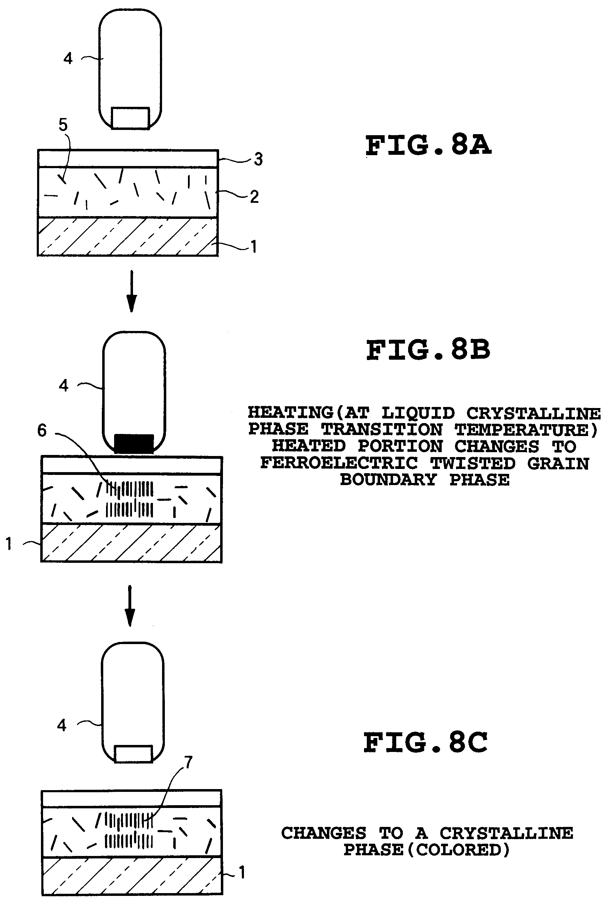

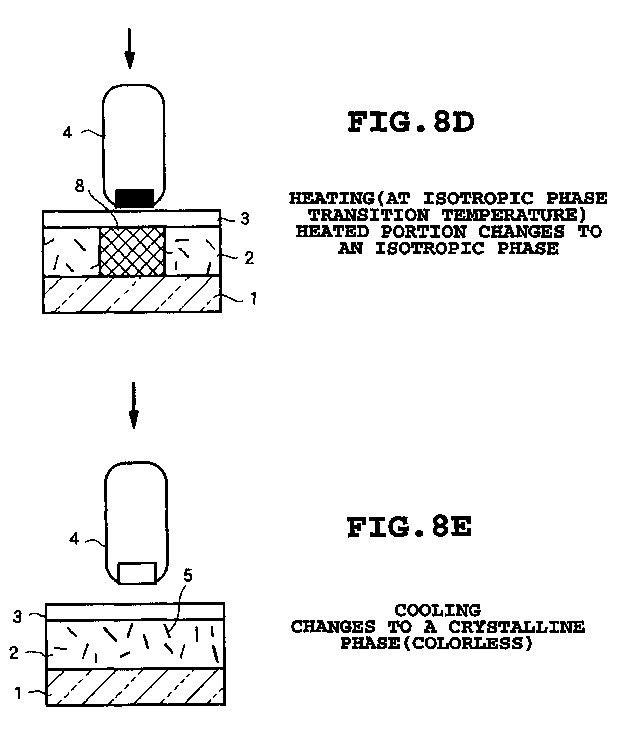

Referring to Fig. 8, color developing tests of the thermochromic material of the present invention will be described below. In Fig. 8, 1 denotes a glass support, 2 is a thermochromic layer, 3 is a protective layer, 4 is a thermal head, 5 is a molecule of thermochromic compound, and 6 is a (ferroelectric twisted grain boundary (FTGB) layer.

On a glass support 1 of a thickness of 1 mm was coated 1,3-oxybis(4-hexyloxybenzylideneanilinebenzoic acid)benzene prepared in a manner similar that described in Example 1 to a thickness of 5 µm to form a thermochromic layer 2. Then, a 16 µm-thick polyethyleneterephthalate layer was press-bonded onto the thermochromic layer 2 as a protective layer 3. In this state, the sample plate thus obtained comprised by yellowish white crystals. The sample plate was fitted with a photo multiplier tube provided with a recorder (not shown) and coloring and decoloring tests were performed by heating with a thermal head 4 and cooling the sample plate.

As shown in Fig. 8A, the molecules 5 of the thermochromic compound in the thermochromic layer 2 are arranged substantially at random. Upon heating at 155°C by means of the thermal head 4, the sample plate turned purplish blue. This indicates that the region of the sample plate opposing the thermal head 4 was heated to temperatures above the liquid crystalline phase transition temperature so that the thermochromic compound molecules were oriented perpendicular to the surface of the glass substrate 1 and thus converted into a ferroelectric TGB (FTGB) phase 6 (cf. Fig. 8B).

The time required for this phase transition was 52 milliseconds. Even when the sample plate was cooled in that state and crystallized, i.e., converted into the crystalline phase, the sample remained to be in a colored state (Fig. 8C). When the colored portion was heated to elevate its temperature to 190°C, the purplish blue color disappeared and the heated portion became transparent. This indicates that the crystalline phase of the heated portion changed to an isotropic phase 8 (Fig. 8D). Upon quenching as it was, the sample turned yellowish white, which it had originally (Fig. 8E).

As described above, the sample was made to undergo phase transition of isotropic crystalline phase-ferroelectric TGB phase (colored)-oriented crystalline phase (colored)-isotropic phase-isotropic cyrstalline phase according as the on/off or switching of the thermal head at selected temperatures. Therefore, the sample served as a recording device.

### Example 9

On a 5x10 cm piece of paper or polyimide as a substrate was coated the thermochromic material obtained in Example 1, and then a 16 µm-thick layer of polyethylene terephthalate as a protective layer was laminated on the coated substrate. Appropriate characters or symbols were printed on the substrate or protective layer to form a thermolabel. The thermolabel developed a color at temperatures in the range of from 150 to 170°C, thus sensing the temperature at which it stood.

The present invention has been described in detail with respect to an embodiment, and it will now be apparent from the foregoing to those skilled in the art that changes and modifications may be made without departing from the invention in its broader aspects, and it is the intention, therefore, in the appended claims to cover all such changes and modifications as fall within the true spirit of the invention.

## Claims

1. A compound having a repeating unit represented by general formula (I)
A₁-M₁-X-B-Y-M₂-A₂ (I)
wherein A₁ and A₂ are terminal chain groups, respectively; M₁ and M₂ are mesogen groups, respectively; X and Y are independently a bonding group selected from -COO- and -OCO-; and B is an aromatic group.

2. The compound as claimed in claim 1, characterized in that said A₁ and A₂ are independently at least one of members selected from the group consisting of:
-O(CH₂)ₙ₋₁CH₃ (n=1-30)
-(CH₂)ₙ₋₁CH₃ (n=1-30)
-O(CH₂CH₂O)ₙCH₃ (n=1-10)
-O(CH₂CH₂CH₂O)ₙCH₃ (n=1-10).

3. The compound as claimed in claim 1, characterized in that said M₁ and M₂ are independently at least one member selected from the group consisting of:

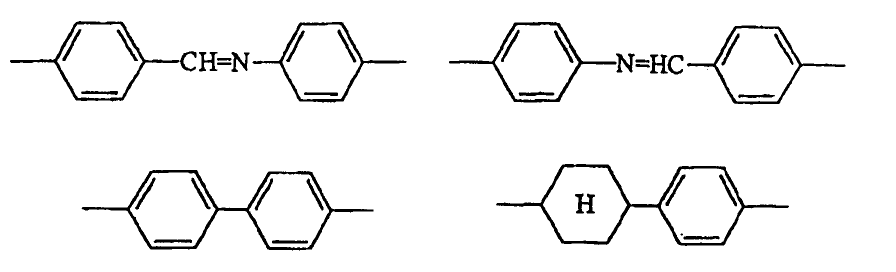

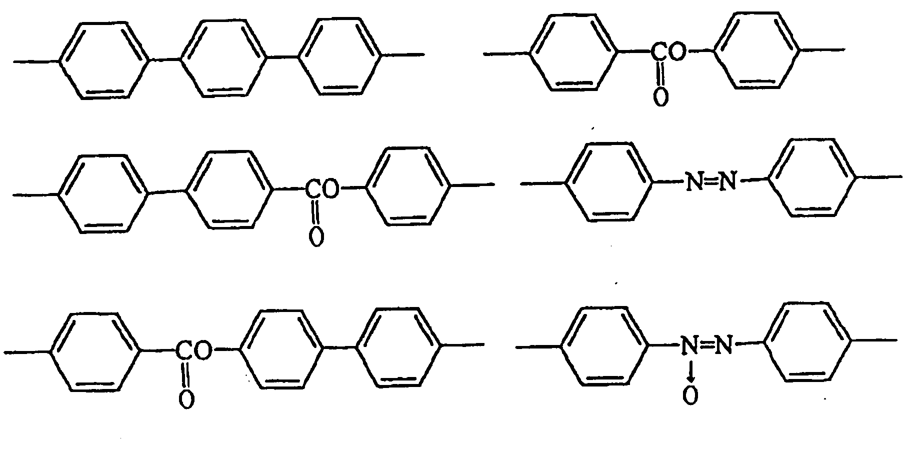

4. The compound as claimed in claim 1, characterized in that said aromatic group B is at least one member selected from the group consisting of:

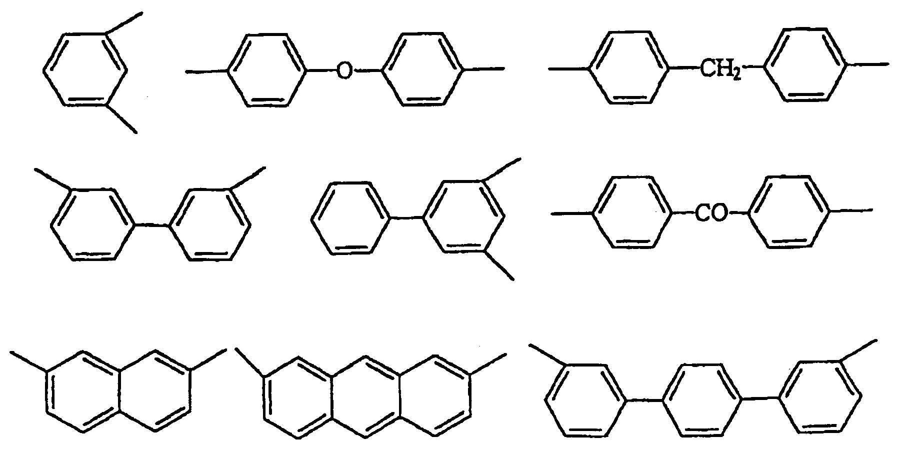

5. A heat-sensitive recording medium characterized by comprising the compound as claimed in any one of claims 1 to 4.

6. A heat-sensitive color developing material characterized by comprising the compound as claimed in any one of claims 1 to 4.

7. A thermolabel characterized by comprising a substrate and a layer provided on said substrate characterized by comprising the compound as claimed in any one of claims 1 to 4.

8. A heat-sensitive ink characterized by comprising a vehicle and the compound as claimed in any one of claims 1 to 4 dispersed therein.
